# FASCICULE DE BREVET EUROPEEN

(11) **EP 0 948 450 B1**
(45) Date de publication et mention de la délivrance du brevet: **18.10.2000**
(21) Numéro de dépôt: 97948943.2
(22) Date de dépôt: 27.11.1997
(51) Int. Cl.: B65G 13/11, B65G 39/12

(54) **RAIL A GALETS**
SCHIENE MIT ROLLEN
RAIL WITH ROLLERS

(30) Priorité: 28.11.1996 FR 9614838
(43) Date de publication de la demande: 13.10.1999
(73) Titulaire: SIPA Roller, Mouilleron-le-Captif, 85006 la Roche-sur-Yon Cedex (FR)
(72) Inventeur: FAISANT, Gilles, F-85100 Les Sables d'Olonne (FR)
(74) Mandataire: Phélip, Bruno
(86) Numéro de dépôt international: FR9702141
(87) Numéro de publication internationale: WO9823508

(56) Documents cités:
- DE-A- 2 844 229
- DE-A- 3 346 818
- DE-A- 3 724 097
- DE-B- 1 208 687
- FR-A- 2 563 506
- US-A- 4 186 830

## Description

La présente invention concerne un rail à galets utilisé notamment dans le domaine du stockage en nappes dynamiques pour la préparation de commandes ou l'alimentation de postes de travail par exemple.

Ces rails à galets sont bien souvent constitués d'un profilé réalisé en tôle dont la section est en forme de U ou de oméga ouvert à la partie supérieure et dont les rebords sont aménagés pour accueillir les axes des galets, comme décrit par exemple dans le document US-A-3 586 142.

Un autre type de rail, décrit dans le document FR-A-2 563 506, associe un rail profilé en tôle et une barrette en matériau plastique qui sépare et maintient les galets sur ledit rail. Cette barrette plastique permet aussi d'améliorer la résistance du rail en évitant dans une certaine mesure son ouverture lorsqu'il véhicule des charges importantes.

Il existe également des rails utilisant un profilé en tôle à section en U, mais ouvert vers le bas. Le fond du U est perforé pour permettre le logement des galets. Ce type de rail, décrit notamment dans le document US-A-4 186 830, comporte en plus, des axes façonnés directement dans les flancs du profilé Ce type de rail est particulièrement économique, et de plus il peut être réalisé directement par profilage d'une bande de tôle préalablement emboutie.

Toutefois, ce type de rail ne peut pas comporter une grande densité de galets puisqu'il faut conserver un minimum de matière entre les galets pour ne pas le fragiliser.

La présente invention propose une structure de rail qui s'apparente à celle décrite dans le document précité FR-A-2 563 506. Il présente l'avantage d'offrir une résistance encore plus grande et de réduire d'une façon notable, les coûts de production.

Le rail selon l'invention est constitué d'une association d'un profilé inférieur dont la section est en forme de U ou de oméga, et d'un profilé supérieur formé d'une bande de tôle en acier par exemple, découpée et emboutie, qui sert de porte-galets, laquelle bande comporte des rives qui sont repliées et serties sur les rebords dudit profilé inférieur, lesquelles rives sont reliées par des traverses entre lesquelles sont positionnés les galets.

Selon une disposition préférentielle de l'invention, la bande de tôle constituant le profilé supérieur, comporte des axes qui sont obtenus directement par découpage-emboutissage, et qui sont associés aux rives. Par ailleurs, les traverses de liaison des rives ont une longueur qui est supérieure à la largeur des galets et une largeur qui est relativement faible de façon à faciliter le pliage et le basculement des rives pratiquement à l'équerre par rapport auxdites traverses, pour permettre l'intégration desdits galets entre les axes, lesquels axes s'insèrent dans les moyeux des galets et emprisonnent ces derniers après remise à plat des rives dans le plan desdites traverses.

Selon une autre disposition de l'invention, les traverses du profilé supérieur ont une section en U sur leur longueur pour, d'une part, leur conférer une certaine rigidité et délimiter de manière précise à leurs extrémités la zone où s'effectue le pliage de la rive par rapport à ladite traverse, établissant une distance entre lesdites zones de pliage qui est nettement supérieure à la largeur des galets et pour, d'autre part, établir et maintenir un écartement précis des parois latérales du profilé inférieur lors du sertissage des rives dudit profilé supérieur sur les rebords dudit profilé inférieur.

Selon une autre disposition de l'invention, la section des portions d'axes des galets est en forme de U renversé, laquelle section s'inscrit dans un cercle ayant un diamètre inférieur à celui du moyeu des galets, la hauteur desdites portions d'axes est sensiblement égale au rayon dudit moyeu et leur longueur utile est du même ordre que le diamètre interne du moyeu desdits galets.

Selon une autre disposition de l'invention, la partie basse du profilé inférieur comporte des renflements, en saillie de part et d'autre du fond, lesquels renflements améliorent notamment l'inertie en torsion du rail et constituent une sorte de glissière multi-usages permettant la fixation du rail sur un bâti au moyen de cavaliers ou clips, et la mise en place d'accessoires comme par exemple un système de freinage faisant office de séparateur, logé à l'intérieur du profilé, entre le fond et les galets, guidé dans lesdits renflements, ou encore, par une utilisation du seul profilé inférieur, la mise en place d'une structure de guidage qui s'intercale entre les rails.

L'invention concerne également le procédé de confection du rail. Ce procédé consiste à préparer, par des opérations de pliage ou profilage, à partir d'une bande de tôle, un profilé inférieur à section en U ou oméga et un profilé supérieur qui sert de support aux galets, l'ensemble étant assemblé par repliage et sertissage des rives de ladite bande sur les rebords dudit profilé inférieur.

Selon une disposition préférentielle de l'invention, le procédé consiste - à préparer préalablement le profilé supérieur en forme de bande de tôle, par des opérations de découpage, emboutissage et de façonnage pour façonner directement des axes de galets, et - à monter lesdits galets en pliant les rives à l'équerre par rapport aux traverses, afin d'écarter lesdits axes et permettre la mise en place et l'intégration desdits galets et en particulier du moyeu de chaque galet en face desdits axes, puis - à repositionner lesdites rives à plat dans le plan de ladite bande et desdites traverses, ce qui a pour effet d'introduire lesdits axes dans le moyeu desdits galets, emprisonnant ces derniers.

L'invention sera encore détaillée à l'aide de la description suivante et des dessins annexés donnés à titre indicatif, et dans lesquels :
- la figure 1 représente, en perspective, une portion de rail selon l'invention ;
- les figures 2 et 3 montrent une portion des rives avec un axe de galet, en perspective ;
- la figure 4 est une vue en coupe du rail à galets, d'une part au niveau de l'un des axes de galet et, d'autre part, entre un axe et une traverse ;
- la figure 5 représente, vue de dessus, une portion de la bande de tôle découpée qui constitue le profilé supérieur, avant notamment l'emboutissage des axes qui servent de support aux galets et aux traverses ;
- la figure 6 représente la bande de tôle de la figure 5 après l'opération d'emboutissage des axes et des traverses ;
- la figure 7 est une coupe selon 7-7 de la figure 6 au niveau d'une traverse ;
- les figures 8 à 14 illustrent les différentes étapes de la fabrication d'un rail ;
- la figure 15 représente une vue de côté d'un rail muni d'un cavalier ou clip pour sa fixation sur un bâti ;
- la figure 16 est une vue de face de la figure 15 ;
- la figure 17 représente une élévation d'un rail, en coupe longitudinale, équipé d'un système de freinage des galets, représenté en position inactive ;
- la figure 18 représente le rail de la figure 17 avec le système de freinage en position active sur trois galets ;
- la figure 19 est une coupe selon 19-19 de la figure 18 ;
- la figure 20 est une élévation en coupe montrant le profilé inférieur d'un rail, équipé d'une structure de guidage ;
- la figure 21 est une coupe de la figure 20.

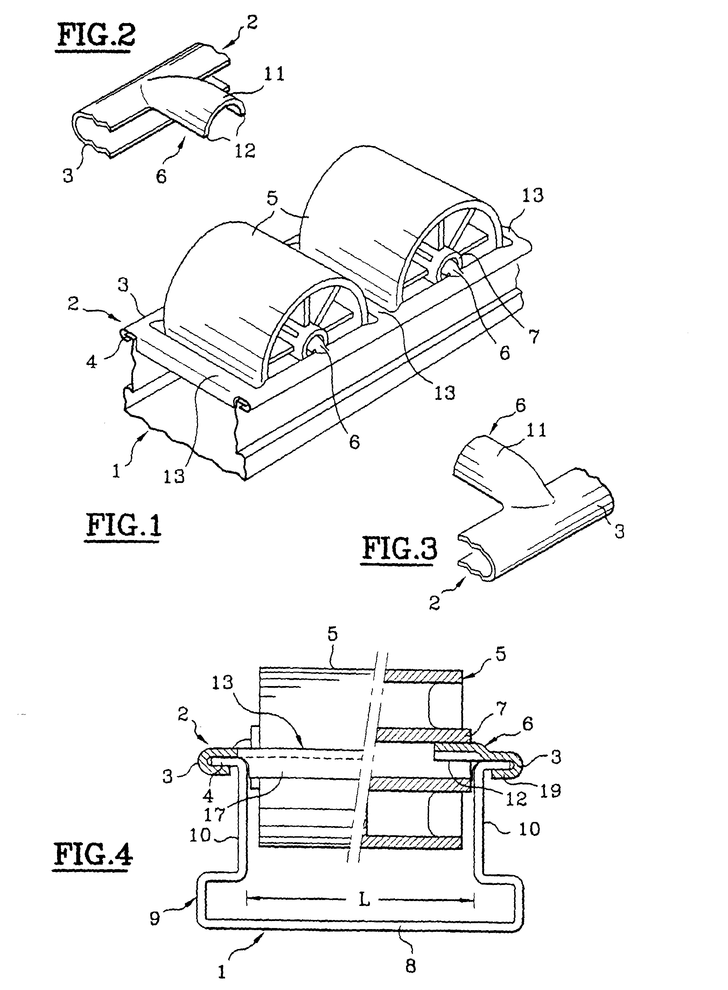

Le rail selon l'invention, tel que représenté figure 1, comprend 3 sortes d'éléments :- un profilé inférieur 1 à section en U ou oméga, qui constitue la poutre de soubassement, - un profilé supérieur 2 qui est posé sur le profilé 1 et dont les rebords ou rives 3 sont repliées et serties sur les rebords 4 dudit profilé 1, - des galets 5, régulièrement répartis, portés par le profilé 2 et en particulier par des axes 6 qui sont façonnés directement et font partie du profilé 2, de façon monobloc comme représenté figures 2 et 3. Ces portions d'axes 6 s'intègrent dans le moyeu 7 des galets 5, lequel moyeu se présente sous la forme d'un tube.

Le profilé 1 est réalisé à partir d'une bande de tôle en acier, façonnée par pliage ou profilage.

Le profilé 2 est, de la même façon, préparé à partir d'une bande de tôle en acier également, qui est découpée et emboutie pour accueillir les différents galets 5. Les rives 3 de cette bande de tôle sont ensuite pliées et profilées pour être assemblées avec le profilé 1 comme détaillé plus loin.

La figure 4 montre une élévation du rail, en coupe transversale.

Le profilé 1 comporte un fond 8, des renflements latéraux 9 et, au-dessus de ces renflements, des parois latérales 10 perpendiculaires audit fond 8 et dont la partie supérieure est constituée par les rebords 4 ; ces rebords 4 sont pliés à l'équerre par rapport aux parois latérales 10 et ils s'étendent vers l'extérieur.

Le profilé 2 repose sur le profilé 1 et en particulier sur les rebords 4 et ses rives 3 sont repliées et serties sur lesdits rebords. On remarque que la largeur du rail au niveau des renflements 9 correspond sensiblement à la largeur du rail au niveau du profilé 2 et en particulier des rives 3.

Le profilé 2 comporte également les axes 6 qui s'étendent vers l'intérieur du rail sur une longueur utile qui correspond sensiblement au diamètre du moyeu 7 du galet 5.

Le galet 5 est posé sur l'arrondi supérieur 11 des axes 6. On remarque figure 2, que l'axe 6 se présente sous la forme d'un U renversé. La section de ces axes 6 s'inscrit dans un cercle. Le diamètre du cercle enveloppant cet axe, est sensiblement inférieur au diamètre de l'alésage du moyeu 7 de sorte que les arêtes inférieures 12 de l'axe 6 ne sont pas en contact avec le moyeu 7 du galet 5. La hauteur des axes 6 est même légèrement inférieure au rayon du moyeu 7.

Les axes 6 sont emboutis en saillie, débordant au-dessus du plan supérieur des rives 3.

Les galets 5 sont réalisés de façon classique en matériau plastique du genre polyamide.

Sur la partie gauche de la figure 4, on remarque une portion de la traverse 13 qui s'étend entre les deux rives 3 du profilé supérieur 2. Cette traverse 13 dont la section est en forme de U renversé permet notamment de calibrer la largeur interne L du profilé inférieur 1, laquelle largeur est légèrement supérieure à la longueur totale du moyeu 7 des galets 5. Cette traverse 13 permet de caler les parois latérales 10 lors de l'opération de sertissage des rives 3 du profilé supérieur 2 sur les bordures 4 du profilé inférieur 1.

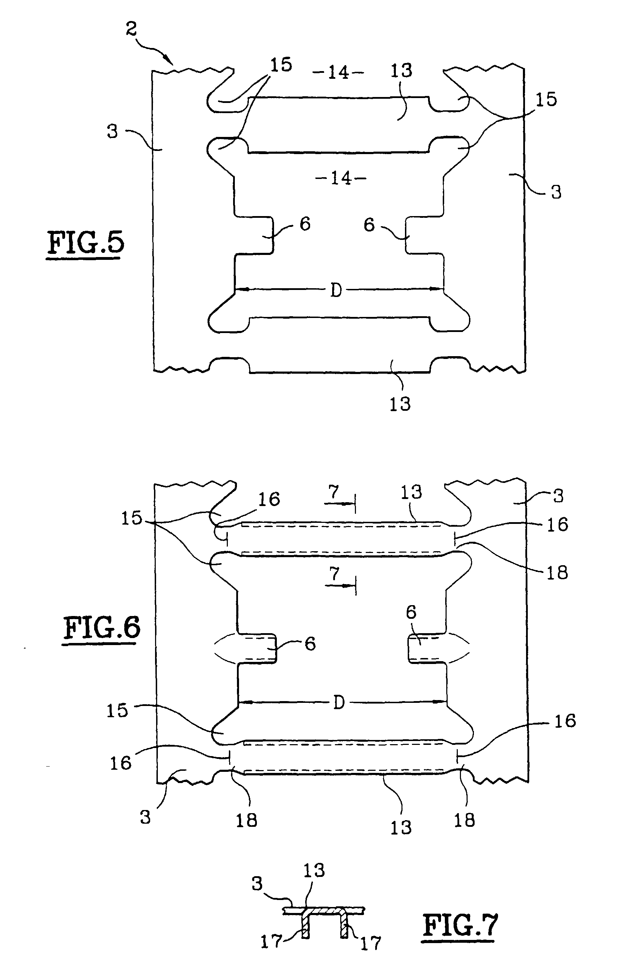

La figure 5 montre la bande de tôle, qui constitue le profilé 2, après l'opération de découpage. Cette bande de tôle est découpée, faisant apparaître les rives 3, les traverses 13 et des fenêtres 14 dans lesquelles se logent les galets 5. Les fenêtres 14 ont une largeur D, prise entre les rives 3, qui est supérieure à celle des moyeux 7 des galets 5 et surtout supérieure à la largeur L entre les parois latérales 10 du profilé inférieur 1 de façon à éviter tout frottement desdits galets sur les rebords de ladite fenêtre.

Dans les fenêtres 14, partant des rives 3, on trouve les axes 6 qui sont ensuite emboutis comme représenté figure 6, pour obtenir la forme représentée figures 2 et 3 notamment.

Les rives 3 sont reliées entre elles au moyen des traverses 13. Ces traverses séparent les galets 5 consécutifs. Elles sont constituées d'une bande de tôle dont la longueur est nettement supérieure à la largeur des galets 5. Les traverses peuvent s'étendre jusque dans les rives 3 au moyen de découpes 15 dont la profondeur est de l'ordre de 2 à 4 mm. Cet aménagement permet de plier les rives 3 par rapport aux traverses 13, autour d'une ligne matérialisée par le trait 16, qui se situe dans une zone en bout des traverses 13.

La figure 6 représente la portion de bande de tôle de la figure 5 après emboutissage. Cet emboutissage permet de façonner les axes 6 en les faisant ressortir en saillie au-dessus du plan du profilé supérieur 2 ; il permet aussi de façonner les traverses 13 pour leur donner une certaine résistance.

Ces traverses 13 sont embouties longitudinalement pour former une sorte de poutre rigide à section en U dont les côtés 17 s'étendent vers le bas comme représenté figure 7. Les côtés 17 ont une hauteur qui est de l'ordre de quelques millimètres, suffisante pour servir d'entretoise, comme représenté figure 4, aux parois latérales 10 du profilé inférieur 1.

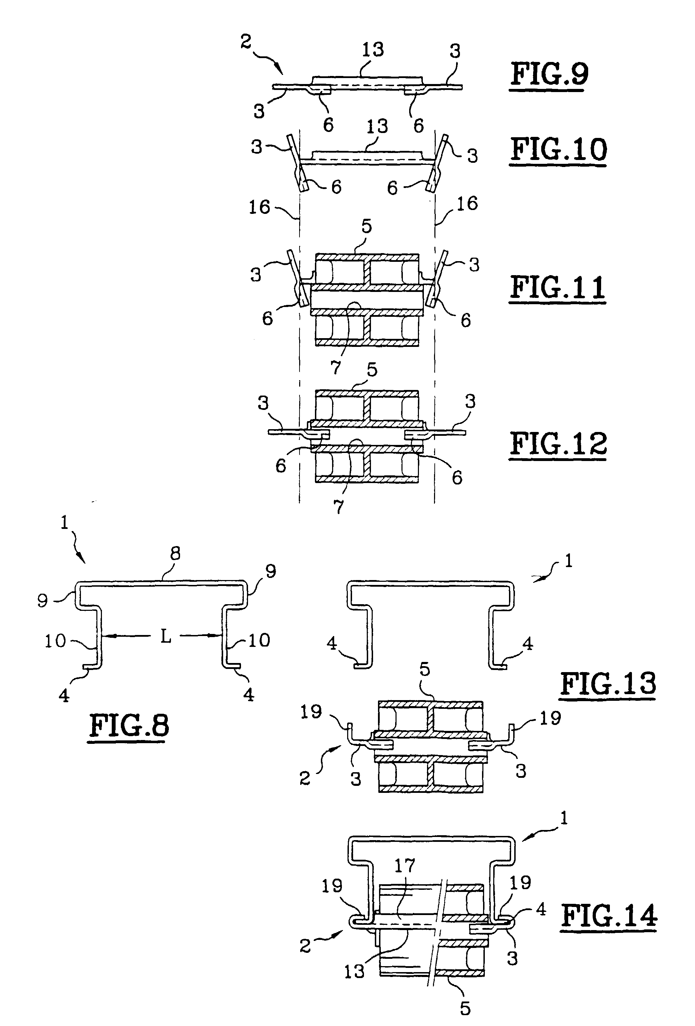

La zone 18 qui se situe à chaque extrémité des traverses 13 correspond à la zone de pliage dont il a été question précédemment et qui sera détaillée ensuite en liaison avec les figures 10 à 12.

C'est dans cette zone 18 que se situe la ligne de pliage 16 et c'est la présence de cette zone qui favorise le pliage des rives 3 par rapport aux traverses 13. Les traverses 13, qui sont rigidifiées par leur section en U, restent en effet parfaitement rectilignes.

La figure 8 représente le profilé inférieur 1 seul, en position retournée tel qu'il apparaît après façonnage en vue d'être intégré dans la chaîne d'assemblage du rail comme représenté figures 9 à 14.

On retrouve le fond 8 dont la largeur est supérieure à l'espace L entre les parois latérales 10 de façon à former les renflements 9. Ces renflements 9 ont une section sensiblement carrée et sont en saillie par rapport aux parois latérales 10.

Les rebords 4 sont dans un plan parallèle à celui du fond 8. Ils sont perpendiculaires aux parois latérales 10 et s'étendent vers l'extérieur à partir de ces dernières.

La bande de tôle qui constitue le profilé 2 est représentée vue de face et retournée figure 9. Les axes 6, en forme de U, sont orientés avec leur ouverture dirigée vers le haut. La traverse 13, à section en U également, est ouverte vers le haut.

La figure 10 montre le pliage de la bande formant le profilé 2 et en particulier le basculement des rives 3, autour des lignes de pliage 16 c'est-à-dire au niveau des zones 18 qui se situent aux extrémités des traverses 13. Ce pliage permet d'écarter les axes 6 afin d'introduire entre ces derniers comme représenté figure 11, les galets 5 en présentant leur moyeu 7 en face desdits axes. Comme représenté figure 12, la bande de tôle et en particulier les rives 3 sont ensuite remises à plat, repositionnées dans le plan des traverses 13 ce qui a pour effet d'emprisonner les galets 5 en positionnant et en alignant les axes 6 dans le moyeu 7.

Le montage du profilé 2 sur le profilé 1 pour former le rail à galets proprement dit, consiste tout d'abord à plier à l'équerre les extrémités des rives 3. Les replis 19 ainsi formés et les extrémités des côtés 17 des traverses 13 forment un logement dans lequel s'intègrent les rebords 4 du profilé 1.

Ces rebords 4 se posent sur la partie interne des rives 3. Ensuite, comme représenté figure 14, les replis 19 des rives 3 sont refermés sur les rebords 4 et sertis ou agrafés ; on obtient ainsi un rail de grande inertie, particulièrement résistant.

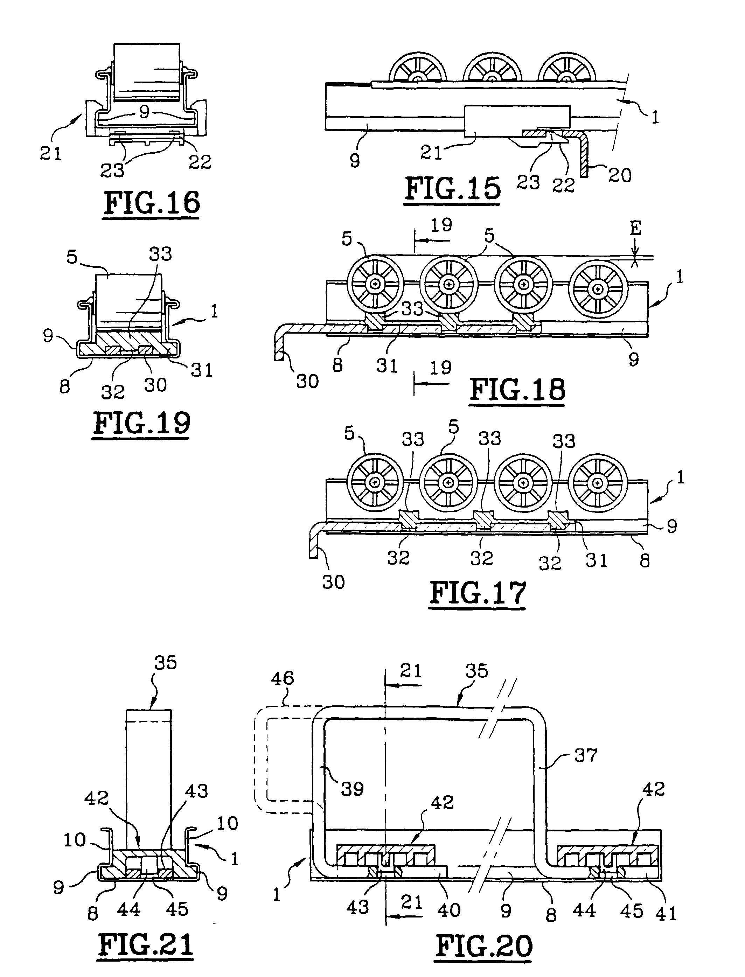

Les figures 15 et 16 montrent l'installation d'un rail sur une traverse 20 d'un bâti. Cette installation s'effectue par exemple au moyen de cavaliers 21 qui permettent une sorte de clipsage du rail sur les traverses 20. Ces cavaliers en matériau plastique ou autre, ont une forme complémentaire à celle de la partie inférieure du profilé 1. Les renflements latéraux 9 aménagés à la partie inférieure du profilé 1 forment une sorte de glissière sur laquelle sont encliquetés les cavaliers 21.

Ces cavaliers 21 comportent une languette 22 élastique, qui est par exemple munie d'au moins un ergot 23, lequel ergot coopère avec un orifice approprié aménagé dans la traverse 20.

Les figures 17 à 19 montrent un équipement particulier pour ce type de rail qui permet par exemple de bloquer trois galets en les positionnant en saillie pour former une sorte de séparateur.

Ce système comprend deux éléments : - une tirette 30 qui repose sur le fond 8 du profilé 1 et un bloc 31 en matériau approprié du genre caoutchouc, qui se présente sous la forme d'une plaque rectangulaire guidée à l'intérieur du profilé 1 et en particulier dans les renflements latéraux 9. Cette plaque 31 comporte une rainure centrale pour coiffer la tirette 30 et des ergots 32 qui associent ladite plaque avec ladite tirette 30.

Ces ergots 32 sont par exemple disposés sous les patins 33, lesquels patins s'étendent au-dessus de la plaque 31 et ont une forme appropriée pour coopérer avec les galets 5. Ces patins 33, représentés au nombre de trois sur la figure, correspondent chacun à un galet 5 et, en position active, comme représenté figure 18, ils sont situés sous les galets 5, lesquels galets sont sensiblement surélevés par rapport aux galets 5 qui sont restés libres, soulevés d'un écart E qui est de l'ordre de 2 mm par exemple.

Cet écart permet de mettre les galets freinés en saillie par rapport aux autres galets du rail et de la nappe. Ces quelques galets freinés sont suffisants pour ralentir la progression de paquets ou colis qui circulent sur la nappe dans un magasin dynamique par exemple.

Les figures 20 et 21 montrent le profilé inférieur 1 seul auquel est associée une structure de guidage ou cloison pouvant s'intercaler dans une nappe de rails complets, soit entre deux rails ou même en bordure de nappe. Cette structure est constituée par exemple d'un plat 35 plié convenablement pour former un guide au moyen de sa branche 36 qui émerge au-dessus du profilé 1, entre les extrémités 37 et 39.

Les extrémités 37 et 39 du guide, perpendiculaires à la branche 36, comportent des replis 40 et 41 respectivement, à l'équerre, posés sur le fond 8 du profilé 1. Ces replis sont verrouillés au moyen de cales 42 qui se logent dans les renflements 9 du profilé 1 et s'étendent entre les parois latérales 10.

Le plat 35 et ses replis 40 et 41 ont une largeur qui est nettement inférieure à la distance L qui sépare les parois latérales 10 du profilé 1. Les replis sont logés et emprisonnés dans une rainure 43 aménagée dans la partie médiane des cales 42.

Ces cales 42 sont solidaires des replis 40 et 41 au moyen d'un ergot 44 disposé au centre et qui fait saillie vers le bas dans la rainure 43 ; cet ergot se loge dans un orifice 45 aménagé dans les replis 40, 41.

Ces structures de guidage sont introduites dans un profilé 1, lequel profilé est fixé sur le bâti comme les autres rails à galets, au moyen de clips ou cavaliers 21.

La forme de ces structures de guidage est de plus très facile à adapter aux contraintes des nappes de rails à galets, puisqu'il suffit de plier le plat 35 selon les besoins pour former, comme représenté en traits mixtes fins, une saillie 46 par exemple pour servir de guide à l'entrée d'une nappe.

## Revendications

1. Rail à galets constitué d'une association d'un profilé inférieur (1) dont la section est en forme de U ou oméga et d'un profilé (2) en forme de bande de tôle découpée et emboutie qui sert de porte-galets, laquelle bande comporte des rives (3) qui sont repliées et serties sur les rebords supérieurs (4) dudit profilé (1), lesquelles rives sont reliées entre elles par des traverses de liaison (13) entre lesquelles sont positionnés lesdits galets (5).

2. Rail à galets selon la revendication 1, caractérisé en ce que le profilé (2) comporte des axes (6) obtenus directement par découpage et emboutissage de la bande de tôle constituant ledit profilé.

3. Rail à galets selon la revendication 2, caractérisé en ce que la longueur des traverses (13) est sensiblement supérieure à la largeur des galets (5) entre les rives (3), et en ce que leur largeur au niveau de ces dernières est relativement faible, de façon à permettre un basculement des rives par rapport aux extrémités desdites traverses au moyen d'une opération de pliage, pratiquement à l'équerre, pour permettre une opération d'intégration desdits galets (5) entre les axes (6), ces derniers s'insérant ensuite dans le moyeu (7) desdits galets par une opération de remise à plat desdites rives, dans le plan desdites traverses.

4. Rail à galets selon la revendication 3, caractérisé en ce que les traverses (13) se présentent sous la forme de poutres à section en U, lesquelles poutres font office d'entretoises entre les parois latérales (10) du profilé inférieur (1) et permettent de situer d'une manière précise, les zones de pliage des rives (3) à l'extrémité desdites traverses (13).

5. Rail à galets selon la revendication 3, caractérisé en ce la section des axes (6) est en forme de U renversé, laquelle section s'inscrit dans un cercle dont le diamètre est inférieur à celui du moyeu (7) des galets (5), la hauteur de ladite section est sensiblement inférieure au rayon dudit moyeu (7) et sa longueur est du même ordre que le diamètre interne du moyeu (7) desdits galets (5).

6. Rail à galets selon l'une quelconque des revendications 1 à 5, caractérisé en ce que la partie basse du profilé inférieur (1) comporte des renflements (9) en saillie de part et d'autre du fond (8), formant une sorte de glissière multi-usages.

7. Rail à galets selon la revendication 6, caractérisé en ce que les renflements (9) permettent, en coopération avec des cavaliers (21) munis d'une languette souple (22), de fixer ledit rail sur une traverse (20) du bâti en verrouillant un ergot (23) de ladite languette dans un orifice approprié de ladite traverse.

8. Rail à galets selon la revendication 6, caractérisé en ce qu'il comporte, à l'intérieur du profilé (1), un système de freinage des galets constitué d'une tirette (30) qui est posée sur le fond (8) dudit profilé (1) et d'un bloc (31) qui se présente sous la forme d'une plaque guidée dans les renflements (9) dudit profilé, laquelle plaque est associée à ladite tirette et comporte des patins (33) qui coopèrent par déplacement de la tirette (30), avec le dessous desdits galets (5) pour les immobiliser de façon à former un dispositif séparateur.

9. Rail à galets selon la revendication 6, caractérisé en ce qu'il comporte, associée au seul profilé inférieur (1), une structure de guidage en forme de plat (35) fixée audit profilé au moyen de cales (42) insérées dans les renflements (9) dudit profilé.

10. Procédé de confection d'un rail à galets caractérisé en ce qu'il consiste à préparer par des opérations de pliage ou de profilage, à partir d'une bande de tôle, un profilé inférieur (1) à section en U ou oméga et un profilé supérieur (2) porteur des galets, lesquels profilés sont ensuite assemblés entre eux par repliage et sertissage des rives de la bande de tôle constituant ledit profilé (2) sur les rebords supérieurs (4) dudit profilé inférieur (1).

11. Procédé de confection d'un rail à galets selon la revendication 10, caractérisé en ce qu'il consiste, préalablement à l'assemblage des profilés inférieur (1) et supérieur (2), à préparer ledit profilé supérieur (2), par des opérations de découpage, emboutissage et de façonnage, pour former directement les axes (6) des galets (5), et à monter lesdits galets en pliant les rives (3) par rapport aux traverses (13) pour écarter lesdits axes (6) et permettre l'intégration desdits galets entre les axes, lesquels axes pénètrent ensuite dans les moyeux (7) des galets lors de la remise à plat des rives (3), dans le plan desdites traverses (13), emprisonnant lesdits galets.

## Patentansprüche

1. Schiene mit Rollen, umfassend eine Verbindung eines unteren Profils (1), dessen Querschnitt u- oder omegaförmig ist, und eines Profils (2) in Form eines gestanzten und tiefgezogenen Blechbandes, das als Rollenträger dient, wobei dieses Band Randstücke (3) umfasst, die auf den oberen Kanten (4) des Profils (1) umgebogen und gefalzt sind, wobei die Randstücke mit Hilfe von Verbindungsquerträgern (13), zwischen denen die Rollen (5) positioniert sind, untereinander verbunden sind.

2. Schiene mit Rollen nach Anspruch 1, dadurch gekennzeichnet, dass das Profil (2) Achsen (6) umfasst, die direkt durch Stanzen und Tiefziehen des Blechbandes, das das Profil bildet erhalten sind.

3. Schiene mit Rollen nach Anspruch 2, dadurch gekennzeichnet, dass die Länge der Querträger (13) wesentlich größer als die Breite der Rollen (5) zwischen den Randstücken (3) ist, und dadurch, dass ihre Breite auf der Höhe dieser letzteren verhältnismäßig gering ist, um ein Kippen der Randstücke bezüglich der äußeren Enden der Querträger mit Hilfe eines Biegevorgangs praktisch am Anlegewinkel zu ermöglichen, um einen Vorgang des Einfügens der Rollen (5) zwischen die Achsen (6) zu erlauben, wobei die letzteren dann in die Nabe (7) der Rollen durch einen Vorgang des flachen Anbringens der Randstücke innerhalb der Ebene der Querträger eingefügt werden.

4. Schiene mit Rollen nach Anspruch 3, dadurch gekennzeichnet, dass die Querträger (13) die Form von Trägern mit U-Querschnitt aufweisen, wobei diese Träger als Zwischenstücke zwischen den Seitenwänden (10) des unteren Profils (1) dienen und es ermöglichen, die Biegebereiche der Randstücke (3) auf eine genaue Weise auf das Ende der Querträger (13) anzubringen.

5. Schiene mit Rollen nach Anspruch 3, dadurch gekennzeichnet, dass der Querschnitt der Achsen (6) die Form eines umgekehrten U aufweist, wobei dieser Querschnitt in einen Kreis eingeschrieben ist, dessen Durchmesser kleiner als derjenige der Nabe (7) der Rollen (5) ist, die Höhe des Querschnitts deutlich kleiner als der Radius der Nabe (7) ist und seine Länge die gleiche Größenordnung wie der innere Durchmesser der Nabe (7) der Rollen (5) aufweist.

6. Schiene mit Rollen nach einem der Ansprüche 1 bis 5, dadurch gekennzeichnet, dass der untere Teil des unteren Profils (1) vorspringende Ausbauchungen (9) auf beiden Seiten des Bodens (8) umfasst, die eine Art Vielzweckgleitschiene bilden.

7. Schiene mit Rollen nach Anspruch 6, dadurch gekennzeichnet, dass die Ausbauchungen (9) es ermöglichen, in Zusammenwirkung mit Klammern (21), die mit einer flexiblen Zunge (22) versehen sind, die Schiene auf einem Querbalken (20) des Rahmens zu befestigen, indem ein Dorn (23) der Zunge in einer geeigneten Öffnung des Querbalkens verriegelt wird.

8. Schiene mit Rollen nach Anspruch 6, dadurch gekennzeichnet, dass sie im Inneren des Profils (1) ein System zum Abbremsen der Rollen umfasst, die einen Auszugteil (30), das auf dem Boden (8) des Profils (1) angebracht ist, und einen Block (31) aufweist, der die Form einer Platte aufweist, die in den Ausbauchungen (9) des Profils geführt ist, wobei die Platte mit dem Auszugteil verbunden ist und Kufen (33) umfasst, die durch Verschiebung des Auszugteils (30) mit der Unterseite der Rollen (5) zusammenwirken, um sie unter Bildung einer Trennvorrichtung zu blockieren.

9. Schiene mit Rollen nach Anspruch 6, dadurch gekennzeichnet, dass sie, verbunden mit dem einzigen unteren Profil (1), eine Führungsstruktur in Form einer Platte (35) umfasst, die an dem Profil mit Hilfe von Passstücken (42) befestigt ist, die in die Ausbauchungen (9) des Profils eingesetzt sind.

10. Verfahren zur Herstellung einer Schiene mit Rollen, dadurch gekennzeichnet, dass es darin besteht, durch Vorgänge des Biegens oder der Profilgebung von einem Blechband ein unteres Profil (1) mit einem u- oder omegaförmigen Querschnitt und ein oberes Profil (2), das die Rollen trägt, vorzubereiten, wobei die Profile dann durch Biegen und Falzen der Randstücke des Blechbandes, das das Profil (2) ausmacht, an den oberen Rändern (4) des unteren Profils (1) miteinander verbunden werden.

11. Verfahren zur Herstellung einer Schiene mit Rollen nach Anspruch 10, dadurch gekennzeichnet, dass es darin besteht, vor dem Zusammenbau des unteren (1) und des oberen (2) Profils das obere Profil (2) durch Vorgänge des Stanzens, des Tiefziehens und der Formgebung vorzubereiten, um direkt die Achsen (6) für die Rollen (5) zu bilden und die Rollen einzubauen, indem die Randstücke (3) bezüglich der Querträger (13) gebogen werden, um die Achsen (6) voneinander zu beabstanden und den Einbau der Rollen zwischen die Achsen zu ermöglichen, wobei die Achsen dann bei der flachen Anbringung der Randstücke (3) innerhalb der Ebene der Querträger (13) in die Naben (7) der Rollen eindringen und die Rollen festlegen.

## Claims

1. A rail with rollers comprising an assembly of a lower profile (1) whose section is U-shaped or omega-shaped and of a profile (2) shaped as a cut and embossed sheet band, used as a roller-carrier, which band comprises edges (3) that are folded up and crimped on the upper rims (4) of the said profile (1), which edges are connected together by linking crossbeams (13) between which the said rollers (5) are positioned.

2. A rail with rollers according to claim 1, characterised in that the profile (2) comprises axles (6) obtained directly by cutting and embossing the sheet band making up the said profile.

3. A rail with rollers according to claim 2, characterised in that the length of the crossbeams (13) is substantially greater than the width of the rollers (5) between the edges (3) and in that their width at these edges is relatively small, so that the edges may tilt with respect to the ends of the said crossbeams via a folding operation, practically at right angle, to allow integration of the said rollers (5) between the axles, (6), the said axles engaging then into the hub (7) of the said rollers by flattening the said edges, on the plane of the said crossbeams.

4. A rail with rollers according to claim 3, characterised in that the crossbeams (13) are U-sectioned beams, which beams serve as spacers between the lateral walls (10) of the lower profile (1) and enable locating accurately the folding zones of the edges (3) at the end of the said crossbeams (13).

5. A rail with rollers according to claim 3, characterised in that the section of the axles (6) is an inversed U-shape, which section is inscribed within a circle whose diameter is smaller than that of the hub (7) of the rollers (5), the height of the said section is substantially smaller than the radius of the said hub (7) and its length is in the same order as the inner diameter of the hub (7) of the said rollers (5).

6. A rail with rollers according to any one of claims 1 to 5, characterised in that the lower section of the lower profile (1) comprises protruding bulges (9) on either side of the bottom (8), forming a kind of multipurpose slide.

7. A rail with rollers according to claim 6, characterised in that the bulges (9) enable, in co-operation with staples (21) provided with a flexible tongue (22), to fasten the said rail on a crossbeam (20) of the frame while locking a pin (23) of the said tongue into an appropriate orifice of the said crossbeam.

8. A rail with rollers according to claim 6, characterised in that it comprises, inside the profile (1), a system for braking the rollers, consisting of a pull means (30) provided on the bottom (8) of the said profile (1) and a block (31) in the form of a guided plate into the bulges (9) of the said profile, which plate is associated with the said pull means and comprises pads (33) that co-operate by displacement of the pull means (30), with the lower section of the said rollers (5) to immobilise them in order to form a separator device.

9. A rail with rollers according to claim 6, characterised in that it comprises, associated with the unique lower profile (1), a flat guiding structure (35) fixed to the said profile using wedges (42) inserted into the bulges (9) of the said profile.

10. A process of manufacture for a rail with rollers characterised in that it comprises to obtain by folding or shaping, from a sheet metal, a U-shaped or omega-shaped lower profile (1) and an upper profile (2) carrying the rollers, which profiles are then assembled together by folding and crimping the edges of the sheet band making up the said profile (2) onto the upper rims (4) of the said lower profile (1).

11. A process of manufacture for a rail with rollers according to claim 10, characterised in that it comprises, before assembling the lower (1) and upper (2) profiles, to obtain the said upper profile (2), by cutting, embossing and machining operations, to form directly the axles (6) of the rollers (5) and to fit the said rollers while folding the edges (3) with respect to the crossbeams (13) to spread aside the said axles (6) and enable integration of the said rollers between the axles, which axles then engage into the hubs (7) of the rollers when flattening the edges (3) on the plane of the said crossbeams (13), thereby locking the said rollers.
